# FASCICULE DE BREVET EUROPEEN

(11) **EP 1 123 863 B1**
(45) Date de publication et mention de la délivrance du brevet: **20.09.2006**
(21) Numéro de dépôt: 01400304.0
(22) Date de dépôt: 07.02.2001
(51) Int. Cl.: B63B 35/32, E02B 15/04

(54) **Navire de récupération de produits pétroliers flottants et installation mobile utilisant de tels navires de récupération**
Schiff zum Sammeln von schwimmenden Kohlenwasserstoffen und bewegbare Vorrichtung die ein solches Schiff verwendet
Vessel for collecting floating hydrocarbons and mobile facility using such a collecting vessel

(30) Priorité: 11.02.2000 FR 0001757
(43) Date de publication de la demande: 16.08.2001
(73) Titulaire: Technip France, 92400 Courbevoie (FR)
(72) Inventeur: Thomas, Pierre-Armand, 92800 Puteaux (FR)
(74) Mandataire: Lanceplaine, Jean-Claude

(56) Documents cités:
- WO-A-88/07000
- WO-A-94/10026
- WO-A-98/57846
- WO-A-99/53146
- FR-A- 2 483 878
- FR-A- 2 589 123
- GB-A- 1 440 978

## Description

La présente invention concerne un navire de récupération de produits pétroliers flottant à la surface de la mer et une installation mobile de stockage et de transport de ces produits pétroliers.

On connaît de nombreux procédés et dispositifs permettant de retenir et d'enlever des produits pétroliers flottant à la surface de la mer, par exemple à la suite d'un naufrage de navire ou bien lors d'une décharge incontrôlée se produisant à partir de puits de pétrole sur le fond de la mer.

Un de ces dispositifs consiste à utiliser une toile flexible formée d'une matière dense et qui est maintenue à l'aide de flotteurs en flottation sur la surface de l'eau par la partie supérieure, tandis que le reste du dispositif collecteur est orienté verticalement dans la mer, habituellement sous l'action d'un contre poids placé le long de son bord inférieur.

Ce genre de dispositif collecteur doit être généralement actionné par différents navires ou par des navires spéciaux, à la fois en ce qui concerne le montage et la mise en place.

A l'usage, il est apparu que ce dispositif collecteur connu est affecté par de nombreuses difficultés et n'est pas aussi efficace que cela est souhaitable en ce qui concerne la retenue et la collecte des produits pétroliers, notamment dans le cas d'une mer houleuse ayant des courants forts et des vagues courtes et changeantes.

De ce fait, compte tenu de l'absence de stabilité de flottation, des produits pétroliers peuvent dans certaines circonstances s'échapper aisément par dessus ou par dessous la toile.

On connaît également un certain nombre de navires spéciaux qui récupèrent les produits pétroliers répandus en larges plaques à la surface de la mer et qui canalisent ces produits jusqu'à des réservoirs de stockage.

A cet effet, on connaît un navire qui présente une rampe inclinée dans le sens de son déplacement, dépassant au-dessus du niveau de la mer et se terminant en dessous de celle-ci, configurée en plaque à écumer et qui se prolonge dans un réservoir collecteur servant de chambre de décantation.

Ce dispositif connu ne donne pas entièrement satisfaction étant donné que son efficacité est limitée du fait que la plaque à écumer, notamment lorsque la mer est agitée, récupère un mélange qui est essentiellement formé d'eau.

Par ailleurs, l'enfoncement variable du navire contribue au manque de rentabilité de ce genre de dispositif.

On connaît également des navires de récupération qui comportent des bouches d'aspiration reliées à des moyens de pompage pour transférer les produits pétroliers flottant à la surface de la mer vers un réservoir de stockage.

Mais, dans le cas de produits pétroliers présentant une forte viscosité, les bouches d'aspiration et les moyens de pompage sont rapidement obstrués et l'ensemble n'est plus opérationnel.

Le document WO 9857846 décrit un navire de ramassage de produits pétroliers, avec un tambour rotatif monté dans un couloir de réception, et ayant des planches de longueurs différentes attachées la surface du tambour.

D'une manière générale, les navires collecteurs utilisés présentent une efficacité limitée et sont tributaires des conditions atmosphériques.

De plus, ils présentent une capacité de stockage limitée si bien qu'ils doivent retourner très souvent vers le port le plus proche pour décharger les produits pétroliers récupérés.

Pour éviter ces inconvénients, il est également connu d'utiliser un navire intermédiaire de grande capacité de stockage, comme par exemple un pétrolier, situé à proximité de la zone polluée.

Mais, dans ce cas également, le transfert des produits pétroliers entre les navires collecteurs et le navire de stockage est tributaire des conditions atmosphériques et il ne peut se faire que lors d'une mer calme ce qui limite la rapidité d'intervention des moyens de lutte contre la pollution.

Or, on sait que la rapidité d'intervention est un facteur essentiel de façon à éviter que les nappes de produits pétroliers atteignent le rivage le plus proche.

L'invention a donc pour but de proposer un navire de récupération de produits pétroliers flottant à la surface de la mer qui remédie aux difficultés précédemment mentionnées et qui permet de collecter et d'enlever efficacement ces produits en pleine mer.

L'invention a également pour but de proposer une installation mobile de stockage et de transport des produits pétroliers récupérés par de tels navires.

L'invention a donc pour objet un navire de récupération de produits pétroliers flottant à la surface de la mer, caractérisé en ce qu'il comprend :
- une partie avant ouverte munie d'un tambour rotatif, partiellement immergé et comportant des éléments longitudinaux déplaçables par rapport à la surface externe de ce tambour entre une position en saillie et une position escamotée,
- une trémie disposée derrière le tambour et de récupération desdits produits enlevés par ce tambour, et
- des moyens de transfert de ces produits de la trémie vers une cuve de décantation et de stockage.

Selon d'autres caractéristiques de l'invention :
- le tambour comprend une enveloppe cylindrique, entraînée en rotation et munie, à intervalles réguliers, de fentes longitudinales comportant chacune un desdits éléments,
- chaque élément est formé par une palette coulissante dans la fente correspondante et reliée à des moyens de déplacement entre la position en saillie pour le ramassage des produits pétroliers et la position escamotée au niveau de la trémie pour le déversement de ces produits dans ladite trémie,
- les moyens de déplacement des palettes coulissantes sont formés, d'une part, par au moins une came fixe comportant une portion cylindrique concentrique à l'enveloppe et correspondant à la position en saillie des palettes et une position incurvée vers le centre de l'enveloppe et correspondant à la position escamotée desdites palettes et, d'autre part, par un rail de guidage monté sur la tranche de ladite came et destiné à coopérer avec des chariots reliés chacun à une semelle d'une palette,
- l'enveloppe du tambour est formée par des secteurs circulaires séparés les uns des autres par des entretoises ménageant entre les bords de deux secteurs adjacents ladite fente longitudinale et des passages radiaux traversés par une semelle de la palette correspondante,
- le tambour est déplaçable verticalement,
- le tambour est associé à des moyens de raclage de la surface externe de l'enveloppe,
- les moyens de raclage sont formés par le bord supérieur de la paroi frontale de la trémie maintenue appliquée sur la surface externe de l'enveloppe par au moins un organe de rappel élastique,
- le bord inférieur de la paroi frontale de la trémie est monté articulé autour d'un axe horizontal,
- la trémie est équipée d'un organe de raclage de la surface interne de la paroi frontale pour pousser les produits pétroliers vers le fond de ladite trémie,
- l'organe de raclage est formé par une lame télescopique montée pivotante autour d'un axe d'articulation entre les bords supérieur et inférieur de la paroi frontale de ladite trémie,
- les parois latérales de la partie avant ouverte du navire comportent des bouches d'aspiration des produits pétroliers et reliées à ladite cuve de stockage,
- le navire de récupération comporte au moins une plaque stabilisatrice déplaçable entre une position appliquée contre le fond de la coque de ce navire et une position écartée dudit fond.

L'invention a également pour objet une installation mobile de stockage et de transport de produits pétroliers, caractérisée en ce qu'elle comprend un navire logistique dont la coque est équipée d'au moins une cuve de stockage, d'une zone d'accostage d'au moins un navire de récupération tel que précédemment mentionné et de moyens de transfert de ces produits dudit navire de récupération vers ladite cuve de stockage.

Selon une autre caractéristique, la zone d'accostage est aménagée à l'intérieur du navire logistique et communique avec la mer par l'arrière dudit navire logistique.

D'autres caractéristiques et avantages de l'invention apparaîtront à la lecture de la description qui va suivre, donnée à titre d'exemple et faite en référence aux dessins annexés, sur lesquels :
- la Fig. 1 est une vue schématique montrant une nappe de produits pétroliers et une installation conforme à l'invention pour la récupération de ces produits,
- la Fig. 2 est une vue schématique en élévation d'un navire logistique de l'installation conforme à l'invention,
- la Fig. 3 est une vue schématique en élévation d'un navire de récupération des produits pétroliers,
- la Fig. 4 est une vue schématique de dessus du navire de récupération représenté à la Fig. 3,
- la Fig. 5 est une vue schématique en coupe transversale du tambour collecteur du navire de récupération,
- la Fig. 6 est une demi-vue schématique, en coupe longitudinale du tambour collecteur,
- la Fig. 7 est une vue schématique en perspective d'une partie du tambour collecteur,
- la Fig. 8 est une demi-vue schématique en coupe longitudinale montrant une variante des moyens d'entraînement en rotation du tambour collecteur.

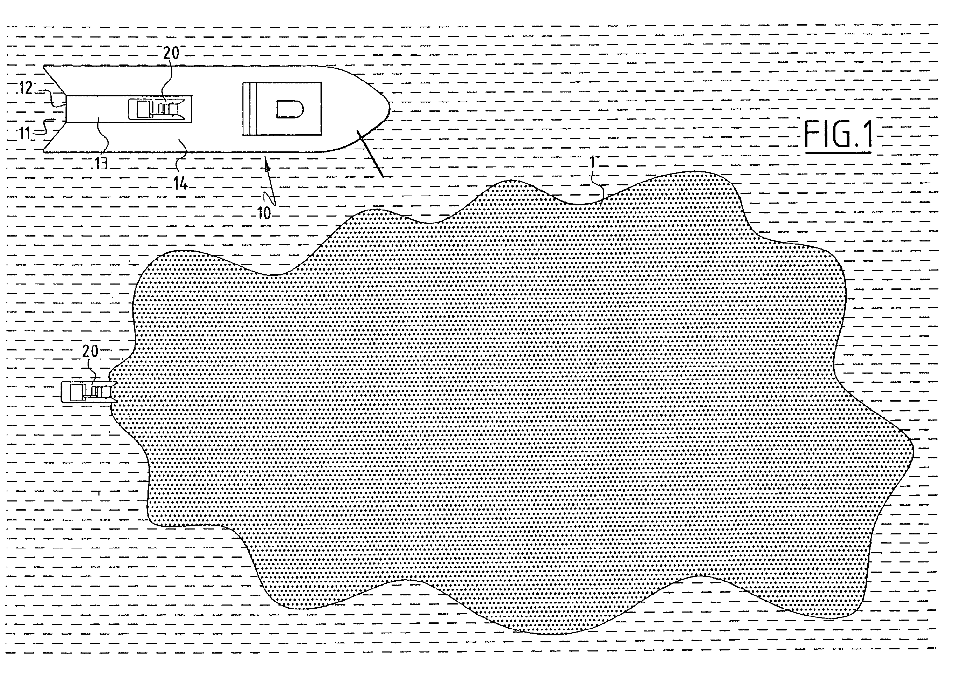

Sur la Fig. 1, on a représenté schématiquement une nappe 1 de produits pétroliers flottant à la surface de la mer et provenant par exemple d'un naufrage d'un pétrolier ou bien d'une décharge incontrôlée se produisant à partir d'un puits de pétrole sur le fond de la mer.

L'installation mobile conforme à l'invention pour récupérer avant qu'ils n'arrivent sur le littorale les produits pétroliers de la nappe 1, se compose d'un navire logistique 10 ayant une grande capacité de stockage et de navires de récupération 20.

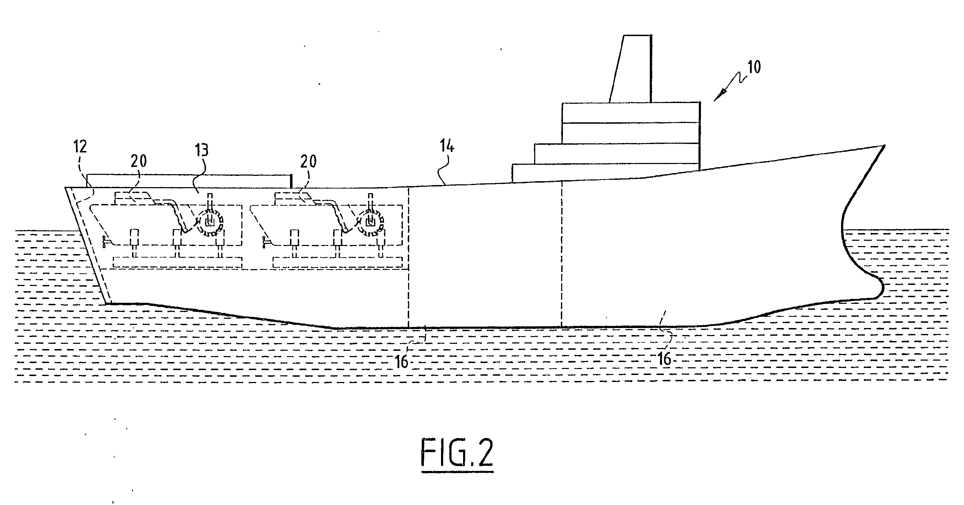

Ainsi que représenté schématiquement sur les Figs. 1 et 2, ce navire logistique 10 comporte à sa partie arrière une ouverture 11 qui peut être obturée à l'aide d'un volet basculant 12. Le volet basculant 12 délimite une zone interne 13 ménagée dans la coque 14 du navire 10.

Cette zone interne 13 forme une zone d'accostage d'au moins un navire de récupération 20 de plus faible tonnage et destiné à récupérer les produits pétroliers de la nappe 1 et à les transférer dans le navire logistique 10.

A cet effet, le navire 10 possède une grande capacité de stockage des produits pétroliers récupérés par les navires 20 et qui est constituée par plusieurs cuves 16 réparties dans la coque 14 dudit navire 10. Ce navire 10 est également équipé de moyens de transfert des produits pétroliers des navires de récupération 20 vers lesdites cuves et qui sont constitués par exemple par des moyens de pompage ou par des transporteurs à vis sans fin ou encore par des transporteurs à godets.

Le volet 12 est déplaçable par des moyens appropriés entre une position d'ouverture de la zone d'accostage 13 permettant à l'eau et aux navires 20 de récupération de pénétrer dans cette zone d'accostage 13 et une position de fermeture de cette zone 13 mettant ainsi les navires de récupération 20 à l'abri et permettant de transférer les produits pétroliers récupérés par ces navires 20 dans les cuves de stockage 16, même par forte houle.

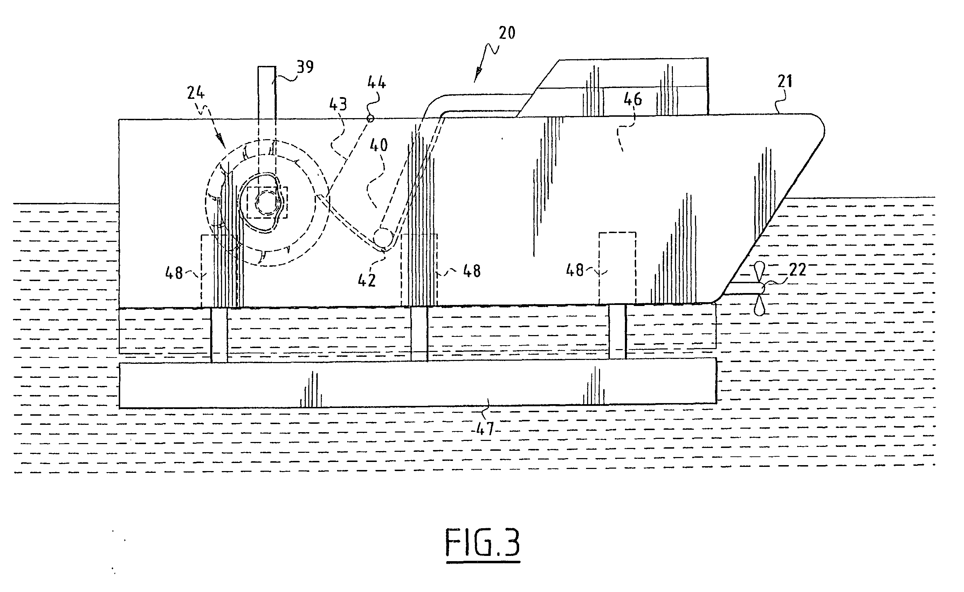

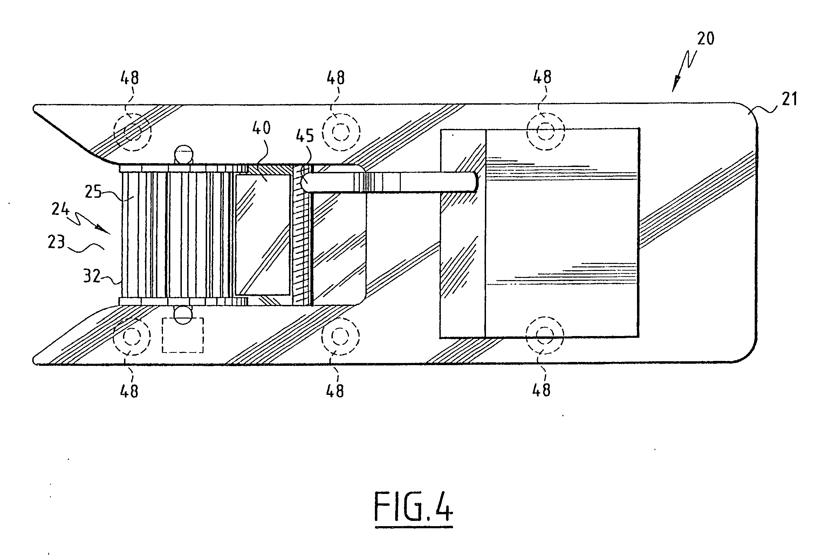

En se reportant maintenant aux Figs 3 et 4, on va décrire un navire de récupération 20 des produits pétroliers.

Le navire de récupération 20 est formé par une coque 21 et dispose de ses propres moyens 22 de propulsion lui permettant de se déplacer entre le navire logistique 10 et la nappe 1 de produits pétroliers.

La partie avant de la coque 21 du navire de récupération 20 comporte une ouverture 23 en forme de V, comme représentée à la Fig. 4, de telle manière qu'au cours du déplacement du navire 20 dans la nappe 1, une partie des produits pétroliers pénètre dans cette ouverture 23.

Cette ouverture 23 est pourvue de moyens de récupération des produits pétroliers flottant à la surface de la mer et qui sont constitués par un tambour collecteur 24 rotatif et partiellement immergé, comportant des éléments longitudinaux déplaçables par rapport à la surface externe de ce tambour entre deux positions respectivement en saillie et escamotée, comme on le verra ultérieurement.

Le navire 20 est également équipé, d'une part, d'une trémie 40 disposée derrière le tambour 24 et qui permet de récupérer les produits pétroliers enlevés de ce tambour 24 et, d'autre part, de moyens 45 de transfert de ces produits de la trémie 40 vers au moins une cuve 46 de décantation et de stockage aménagée à l'intérieur de la coque 21.

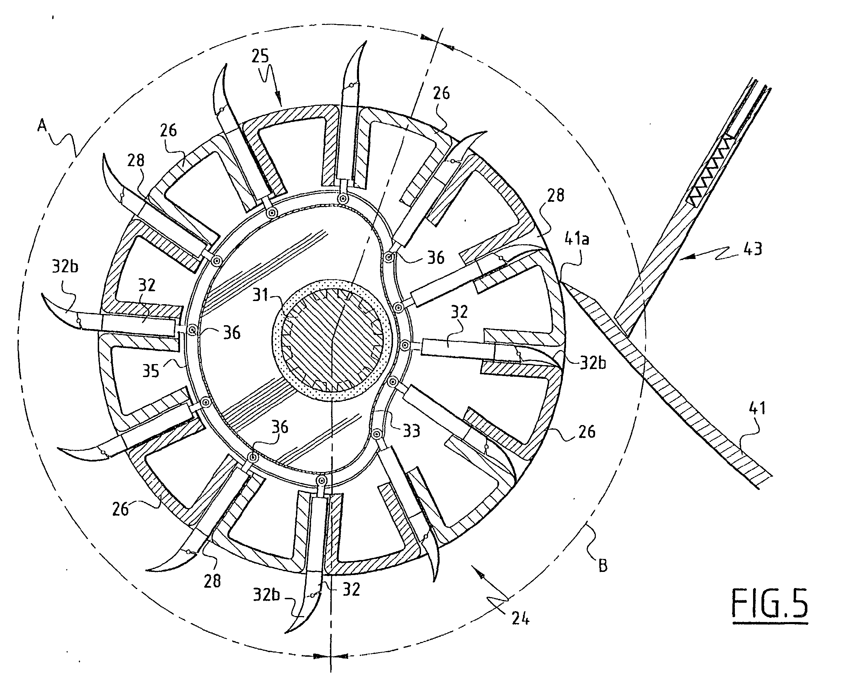

En se reportant maintenant aux Figs. 5 à 7, on va décrire un exemple de réalisation de tambour collecteur 24.

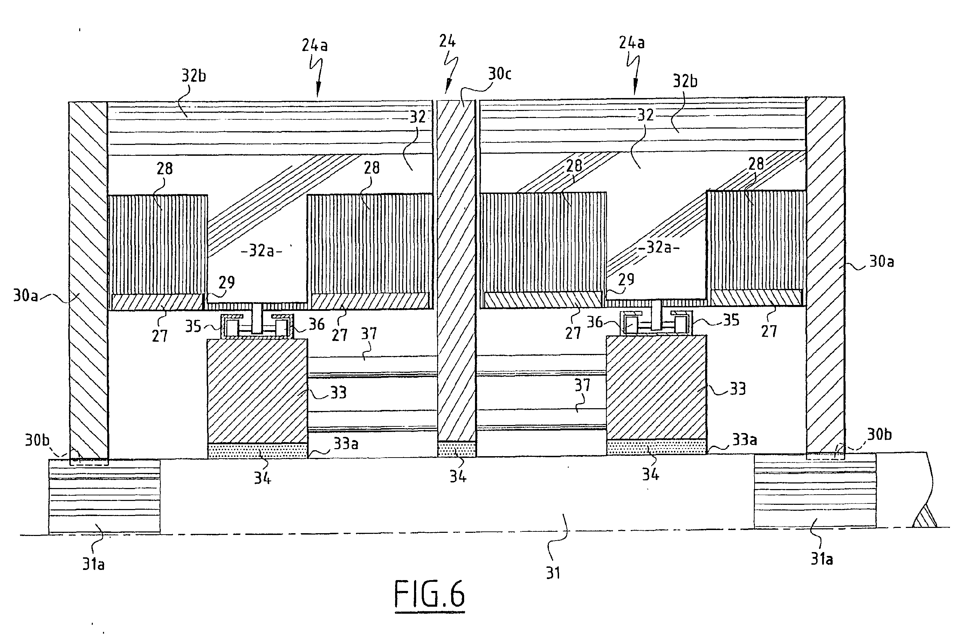

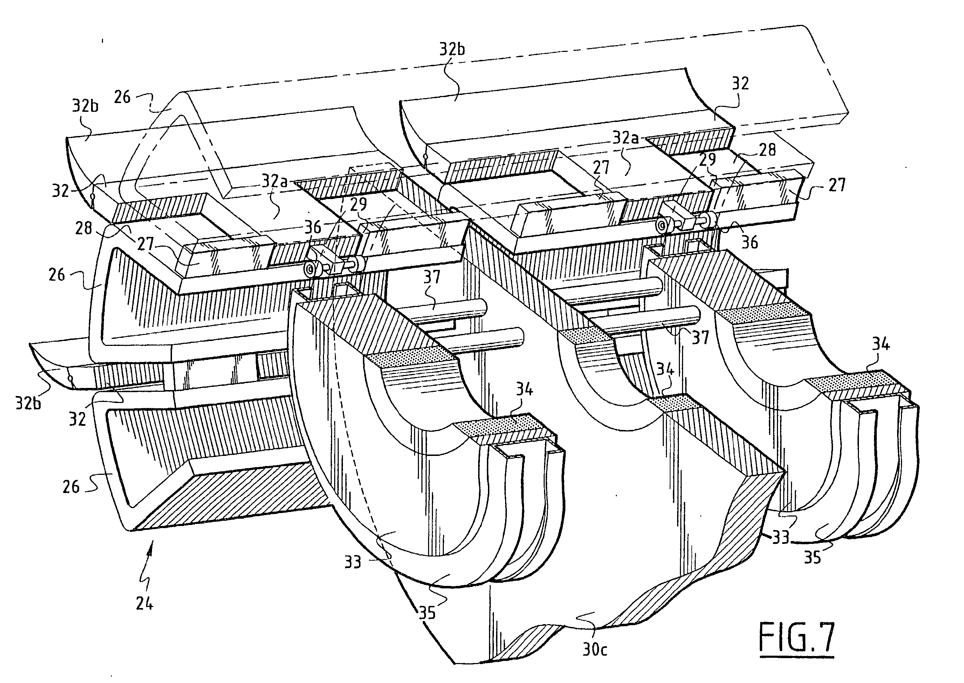

Ce tambour collecteur 24 comprend une enveloppe cylindrique désignée dans son ensemble par la référence 25 et formée de secteurs circulaires 26 séparés les uns des autres par des entretoises discontinues 27 ménageant entre les bords de deux secteurs adjacents, une fente longitudinale 28 et entre lesdits bords et les entretoises des passages radiaux 29, ainsi que représentés aux Figs. 6 et 7.

La juxtaposition des secteurs circulaires 26 entre lesquels sont intercalées les entretoises 27 forme donc une succession de fentes longitudinales 28 dans chacune desquelles est disposée un élément déplaçable entre les deux positions respectivement en saillie et escamotée.

Les secteurs circulaires 26 sont reliés entre eux par les entretoises 27 à l'aide de moyens appropriés, comme par exemple des éléments de vissage ou encore par soudage, et également par deux flasques latéraux 30a fixés chacun à une extrémité desdits secteurs circulaires 26 par exemple par soudage.

L'ensemble constitué par les secteurs circulaires 26 et les flasques latéraux 30a est entraîné en rotation.

Selon un premier mode de réalisation représenté à la Fig. 6, l'arbre transversal 31 est également entraîné en rotation par tous moyens appropriés, comme par exemple un moteur électrique ou un moteur hydraulique et l'arbre transversal 31 est solidarisé en rotation avec les secteurs circulaires 26 par l'intermédiaire des flasques latéraux 30a. La liaison en rotation entre l'arbre 31 et les secteurs circulaires 26 est réalisée par tous moyens appropriés.

Dans l'exemple de réalisation représenté sur les figures, la liaison entre l'arbre 31 et les secteurs circulaires 26 constituant l'enveloppe cylindrique 25 est réalisée au moyen de cannelures 31a ménagées à chaque extrémité de l'arbre 31 et qui engrènent avec des cannelures complémentaires 30b ménagées dans l'orifice axial de chaque flasque 30a et qui est traversé par l'arbre 31.

Ainsi, lorsque le moteur entraîne en rotation l'arbre 31, cet arbre 31 entraîne en rotation les flasques 30a par l'intermédiaire des cannelures 31 a et 30b et ces flasques 30a entraînent en rotation les secteurs circulaires 26 formant l'enveloppe 25 du tambour collecteur 24 qui agissent sur les éléments longitudinaux 32.

Comme représenté sur les figures 5 et 6, chaque élément longitudinal est disposé dans une fente 28 et est formé par une palette 32 coulissante, reliée à des moyens de déplacement entre la position en saillie pour le ramassage des produits pétroliers et la position escamotée au niveau de la trémie 40 pour le déversement de ces produits dans ladite trémie 40.

A cet effet et comme représenté sur les Figs. 5 et 6, les moyens de déplacement des palettes 32 coulissantes sont formés par au moins une came fixe 33 comportant une portion cylindrique A concentrique à l'enveloppe 25 et correspondant à la position en saillie des palettes 32 et une portion incurvée B vers le centre de l'enveloppe 25 et correspondant à la position escamotée des dites palettes 32.

La came 33 est fixe et comporte un orifice central 33a qui est traversé par l'arbre 31 présentant dans cette zone une surface externe lisse.

L'orifice central 33a est pourvu par exemple d'un roulement ou d'une bague 34 approprié pour permettre à l'arbre 31 de tourner librement à l'intérieur de la came 33.

Par ailleurs, les moyens de déplacement des palettes coulissantes 32 sont également formés par un rail de guidage 35 monté sur la tranche de la came 33 et destiné à coopérer avec des chariots 36 reliés chacun à la semelle 32a d'une palette 32.

Dans l'exemple de réalisation représenté sur les figures 6 et 7, les moyens de déplacement des palettes coulissantes 32 sont formées par deux cames 33 fixes et parallèles entre elles comportant chacune sur sa tranche un rail 35 coopérant avec des chariots 36 reliés chacun à la semelle 32a de chaque palette 32.

Le tambour 24 est séparé par un flasque intermédiaire 30c en deux demi-tambours 24a formés chacun par des secteurs circulaires 26 déterminant des fentes 28 munies chacune d'une palette 32. Le flasque intermédiaire 30c comporte un orifice central pourvu par exemple d'un roulement ou d'une bague 34 pour permettre à l'arbre 31 de tourner librement à l'intérieur de ce flasque intermédiaire.

Ce flasque intermédiaire 30c est fixe et est solidarisé à un support, non représenté.

Les cames 33 sont reliés au flasque intermédiaire 30c par exemple par des entretoises 37.

L'enveloppe 25 du tambour collecteur 24 est entraînée en rotation par l'arbre 31 et les flasques 30a et les secteurs circulaires 26 entraînent les palettes 32 qui se déplacent le long du rail 35 par l'intermédiaire des chariots 36.

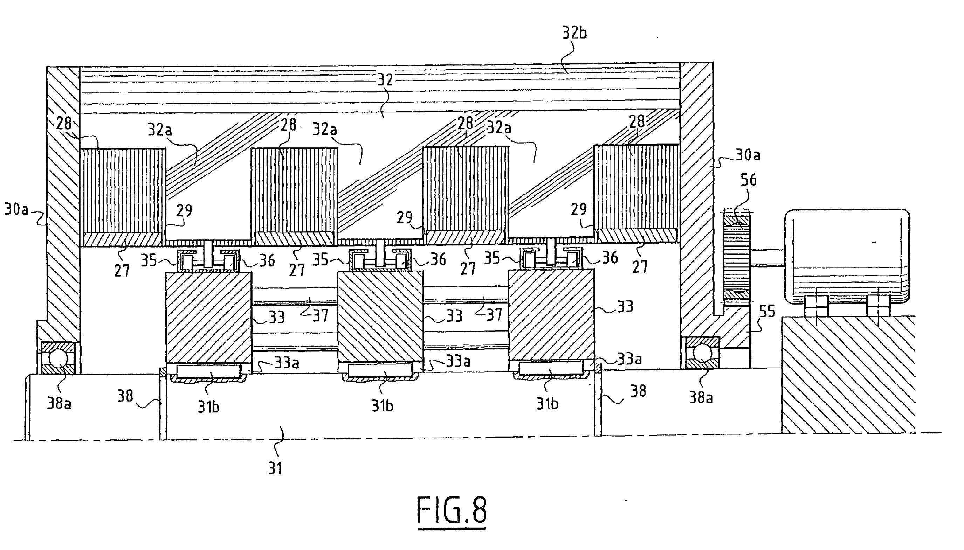

Selon une variante représentée à la Fig. 8, l'arbre transversal 31 est fixe et les cames 33 sont fixées sur cet arbre 31 chacune par exemple par une clavette 31 b. Les cames 33 sont solidarisées entre elles par exemple par des entretoises 37 et maintenues en position longitudinale sur ledit arbre 31 par les rondelles 38 fixées sur le ledit arbre 31 par encliquetage.

Dans ce cas, les flasques 30a sont montés libres en rotation sur l'arbre 31 par exemple au moyen d'un roulement 38a et l'enveloppe 25 du tambour collecteur 24 est entraînée en rotation par l'intermédiaire d'un flasque 30a. A cet effet, l'un des flasques 30a comporte une couronne dentée 55 qui engrène avec un pignon 56 qui est lui-même entraîné par un moteur par exemple électrique ou hydraulique.

Dans la portion A des cames 33, les palettes 32 sont en saillie par rapport à la surface externe de l'enveloppe 25 et lorsque les chariots 36 arrivent dans la zone B des cames 33, les palettes 32 s'escamotent progressivement à l'intérieur des fentes 28 ménagées dans ladite enveloppe 25 du tambour 24, ainsi que représenté à la Fig. 5.

Chaque palette 32 s'étend sur toute la longueur de la fente 28 correspondante entre les deux flasques 30a et elle est munie à son extrémité libre d'un bec 32b formant un angle avec la partie principale de la palette 32 quand lesdites palettes se trouvent dans la portion A des cames 33 et qui sont dans le prolongement de ladite partie centrale de chaque palette 32 quand lesdites palettes 32 sont escamotées à l'intérieur des fentes 28, c'est à dire dans la portion B des cames 33.

Chaque bec 32b est maintenu en position recourbée par rapport à la partie centrale de la palette 32 correspondante par un organe approprié non représenté, comme par exemple un ressort.

Le tambour collecteur 24 est associé à des moyens de raclage de la surface externe de l'enveloppe 25 pour enlever les produits pétroliers récupérés par les palettes 32.

Dans le mode de réalisation représenté sur les figures, les moyens de raclage sont formés par le bord supérieur 41 a de la paroi frontale de la trémie 41 et qui est maintenu appliqué sur la surface externe de l'enveloppe 25 par au moins un organe de rappel élastique, non représenté.

Le bord inférieur de la paroi frontale 41 de la trémie 40 est monté articulé autour d'un axe horizontal 42 (Fig. 3) de telle manière que cette paroi frontale 41 pivote autour dudit axe horizontal 42 et que le bord supérieur 41 reste appliqué sur la surface externe de l'enveloppe 25 du tambour 24 pour toutes les positions dudit tambour 24.

La trémie 40 est équipé d'un organe 43 de raclage de la surface interne de la paroi frontale 41 pour pousser les produits pétroliers vers le fond de ladite trémie 40.

A titre d'exemple, l'organe de raclage est formé par une lame télescopique 43 montée pivotante autour d'un axe d'articulation 44 entre les bords supérieurs et inférieurs de la paroi frontale 41 de ladite trémie 40. La lame basculante 43 est déplacée par tous moyens appropriés.

Les moyens 45 de transfert des produits pétroliers de la trémie 40 vers la cuve 46 peuvent être constitués par des moyens de transport classiques, comme par exemple des vis sans fin, des systèmes de pompage ou des transporteurs à godets.

Le tambour collecteur 24 est monté déplaçable verticalement par exemple au moyen de vérins 39 hydrauliques ou pneumatiques de façon à maintenir ledit tambour à une hauteur constante par rapport au niveau de la mer et en fonction de la ligne de flottaison du navire 20.

Ainsi que représenté à la Fig. 3, le navire 20 est également équipé d'au moins une plaque stabilisatrice 47 déplaçable entre une position appliquée contre le fond de la coque 21, ainsi que représentée en pointillés à la Fig. 3, et une position écartée dudit fond, comme représentée en trait plein sur cette figure. La plaque stabilisatrice 47 est déplaçable par exemple à l'aide de vérins 48 hydrauliques ou pneumatiques.

Dans la position écartée du fond de la coque 21, la plaque stabilisatrice 47 permet de créer entre ce fond et ladite plaque une lame d'eau permettant de ce fait de stabiliser le navire 20.

De plus, la plaque stabilisatrice 47 sert également de plaque d'appui du navire de récupération 20 sur le fond de la zone d'accostage 13 à l'intérieur du navire logistique 10.

Dès qu'une nappe 1de produits pétroliers flottant à la surface de la mer a été détectée, le navire logistique 10 est dépêché sur la zone. Les navires de récupération 20 sont mis à la mer après ouverture du volet 12 situé à l'arrière de ce navire logistique 10 et les navires 20 commencent à récupérer les produits pétroliers.

Pour cela, le tambour collecteur 24 est entraîné en rotation et cette rotation permet de recueillir les produits pétroliers.

En effet, les palettes 32 forment avec la surface externe de l'enveloppe 25 des godets dans la portion A des cames 33 ce qui permet de recueillir les produits pétroliers à la surface de la mer et ces palettes 32 s'escamotent à l'intérieur des fentes 28 dans la portion B desdites cames 33.

Les produits pétroliers se trouvant sur la surface externe de l'enveloppe 25 du tambour 24 sont décollés de cette enveloppe 25 par le bord supérieur 41 a de la paroi frontale 41 de la trémie 40 et tombent dans le fond de ladite trémie 40. Régulièrement la lame télescopique 43 est déplacée entre les bords supérieur et inférieur de la paroi frontale 41 de façon à pousser ces produits pétroliers dans le fond de cette trémie 40.

De façon continue, les produits pétroliers sont évacués dans la cuve de décantation et de stockage 46 du navire de récupération 20 par les moyens 45 de transfert.

Selon le remplissage de cette cuve, la plaque stabilisatrice 47 est plus ou moins écartée du fond de la coque 21 par les vérins 48 de façon à stabiliser le navire de récupération 20.

De même, les vérins 39 déplacent verticalement le tambour collecteur 24 pour le maintenir partiellement immergé dans l'eau de façon à obtenir une efficacité optimale.

Selon une variante, les parois latérales de la partie avant ouverte du navire de récupération 20 comportent des bouches d'aspiration 50 des produits pétroliers et qui sont reliées à la cuve de stockage 46.

Ces bouches d'aspiration peuvent être utilisées en complément au tambour collecteur 24 quand les produits pétroliers présentent une faible viscosité.

Dès que la cuve 46 d'un navire de récupération 20 est pleine, ce dernier retourne vers le navire logistique 10 et entre dans la zone d'accostage 13 aménagée à l'intérieur de ce navire 10.

La plaque stabilisatrice 47 du navire de récupération 20 est appliquée contre le fond de la zone d'accostage 13 de façon à stabiliser le navire de récupération 20 et les produits pétroliers récupérés sont évacués de la cuve 46 dudit navire 20 et transférés dans la cuve de stockage du navire logistique 20 par tous moyens appropriés, comme par exemple des vis sans fin, des transporteurs à godets ou des systèmes d'aspiration.

Pendant le stockage des produits pétroliers dans la cuve 16 du navire logistique 10, ces produits pétroliers peuvent subir divers traitements.

Dès que les cuves de stockage du navire logistique 10 sont remplies, celui-ci retourne au port le plus proche pour les vider.

Du fait de la proximité du navire logistique des nappes des produits pétroliers flottant à la surface de la mer, la récupération de ces produits pétroliers est plus rapide et peut être effectuée avant qu'ils n'atteignent le rivage le plus proche.

De plus, le transfert des produits pétroliers entre les navires de récupération et les cuves du navire logistique peut être effectué en toute sécurité même par une mer agitée.

Enfin, le navire de récupération selon l'invention permet d'intervenir rapidement sur la zone polluée et de recueillir de manière optimale des produits pétroliers de faible ou de forte viscosité.

## Revendications

1. Navire de récupération de produits pétroliers flottant à la surface de la mer, comprenant :
- une partie avant ouverte munie d'un tambour collecteur (24) rotatif, partiellement immergé et comportant des éléments longitudinaux (32) déplaçables par rapport à la surface externe de ce tambour (24) entre deux positions respectivement en saillie et escamotée,
- une trémie (40) disposée derrière ledit tambour collecteur (24) et de récupération des produits pétroliers enlevés par ce tambour (24), et
- des moyens (45) de transfert de ces produits pétroliers de la trémie (40) vers au moins une cuve (46) de décantation et de stockage,
- **caracterisé en ce que** le tambour collecteur (24) comprend une enveloppe cylindrique (25) entraînée en rotation et munie, à intervalles réguliers, de fentes (28) longitudinales comportant chacune un desdits éléments (32) formé par une palette (32) coulissante dans la fente (28) correspondante et reliée à des moyens (33, 35, 36) de déplacement entre la position en saillie pour le ramassage des produits pétroliers et la position escamotée au niveau de la trémie (40) pour le déversement de ces produits dans ladite trémie (40), les moyens de déplacement des palettes (32) coulissantes étant formés, d'une part, par au moins une came fixe (33) comportant une portion cylindrique concentrique à l'enveloppe (25) et correspondant à la position en saillie des palettes (32) et une position incurvée vers le centre de l'enveloppe (25) et correspondant à la position escamotée desdites palettes (32) et, d'autre part, par un rail de guidage (35) monté sur la tranche de ladite came (33) et destiné à coopérer avec des chariots (36) reliés chacun à une semelle (32a) d'une palette (32).

2. Navire selon la revendication 1, **caractérisé en ce que** l'enveloppe (25) du tambour (24) est formée par des secteurs circulaires (26) séparés les uns des autres par des entretoises (27) ménageant entre les bords des deux secteurs (26) adjacents ladite fente longidutinale (28) et des passages radiaux (29) traversés par la semelle (32a) de la palette (32) correspondante.

3. Navire selon la revendication 1 ou 2, **caractérisé en ce que** le tambour (24) est déplaçable verticalement.

4. Navire selon la revendication 1 ou 2, **caractérisé en ce que** le tambour collecteur (24) est associé à des moyens (41, 41a) de raclage de la surface externe de l'enveloppe (25).

5. Navire selon la revendication 4, **caractérisé en ce que** les moyens de raclage sont formés par le bord supérieur (41a) de la paroi frontale (41) de la trémie (40) maintenu appliqué sur la surface externe de l'enveloppe (25) par au moins un organe de rappel élastique.

6. Navire selon la revendication 5, **caractérisé en ce que** le bord inférieur de la paroi frontale (41) de la trémie (40) est monté articulé autour d'un axe horizontal (42).

7. Navire selon la revendication 1, **caractérisé en ce que** la trémie (40) est équipée d'un organe de raclage (43) à la surface interne de la paroi frontale (41) pour pousser les produits pétroliers vers le fond de ladite trémie (40).

8. Navire selon la revendication 7, **caractérisé en ce que** l'organe de raclage est formé par une lame télescopique (43) montée pivotante autour d'un axe d'articulation (44) entre les bords supérieur et inférieur de la paroi frontale (41) de ladite trémie (40).

9. Navire selon la revendication 1, **caractérisé en ce que** les parois latérales de la partie avant ouverte dudit navire de récupération comporte des bouches d'aspiration (50) des produits pétroliers et reliées à ladite cuve de stockage (46).

10. Navire selon l'une quelconque des revendications précédentes, **caractérisé en ce qu'**il comporte au moins une plaque stabilisatrice (47) déplaçable entre une position appliquée contre le fond de la coque (21) et une position écartée dudit fond.

11. Installation mobile de stockage et de transport de produits pétroliers, **caractérisée en ce qu'**elle comprend un navire logistique (10) dont la coque (14) est équipée d'au moins une cuve de stockage (16), d'une zone (13) d'accostage d'au moins un navire de récupération (20) selon l'une quelconque des revendications précédentes et des moyens de transfert de ces produits pétroliers dudit navire de récupération (20) vers ladite cuve (16).

12. Installation mobile selon la revendication 11, **caractérisée en ce que** la zone (13) d'accostage est aménagée à l'intérieur du navire logistique (10) et communique avec la mer par l'arrière dudit navire logistique.

## Claims

1. A collecting vessel for oil products floating at the surface of the sea, including:
- an open front part provided with a rotary trapping drum (24) which is partially immersed and comprises longitudinal elements (32) which are movable in relation to the outer surface of this drum (24) between two positions which are projecting and retracted respectively,
- a hopper (40) disposed behind said trapping drum (24) for collecting the oil products removed by this drum (24), and
- means (45) for transferring these oil products from the hopper (40) to at least one decanting and storage tank (46),
- **characterised in that** the trapping drum (24) includes a rotating cylindrical casing (25) provided, at regular intervals, with longitudinal slots (28) each comprising one of said elements (32) formed by a vane (32) sliding in the corresponding slot (28) and connected to means (33, 35, 36) for movement between the projecting position for gathering the oil products and the retracted position at the hopper (40) for discharging these products into said hopper (40), the means for moving the sliding vanes (32) being formed, on the one hand, by at least one fixed cam (33) comprising a cylindrical portion which is concentric to the casing (25) and corresponds to the projecting position of the vanes (32) and a position which curves in towards the centre of the casing (25) and corresponds to the retracted position of said vanes (32) and, on the other hand, by a guide rail (35) mounted on the rim of said cam (33) and intended to co-operate with carriages (36) which are each connected to a plate (32a) of a vane (32).

2. The vessel according to Claim 1, **characterised in that** the casing (25) of the drum (24) is formed by circular sectors (26) which are separated from one another by spacers (27) providing, between the edges of the two adjacent sectors (26), said longitudinal slot (28) and radial passages (29) penetrated by the plate (32a) of the corresponding vane (32).

3. The vessel according to Claim 1 or 2, **characterised in that** the drum (24) is vertically movable.

4. The vessel according to Claim 1 or 2, **characterised in that** the trapping drum (24) is associated with means (41, 41a) for scraping the outer surface of the casing (25).

5. **The vessel according to Claim 4, characterised in that the scraping** means are formed by the upper edge (41 a) of the front wall (41) of the hopper (40) held against the outer surface of the casing (25) by at least one elastic return member.

6. The vessel according to Claim 5, **characterised in that** the lower edge of the front wall (41) of the hopper (40) is mounted in an articulated manner around a horizontal axis (42).

7. The vessel according to Claim 1, **characterised in that** the hopper (40) is equipped with a scraping member (43) at the inner surface of the front wall (41) for pushing the oil products towards the bottom of said hopper (40).

8. The vessel according to Claim 7, **characterised in that** the scraping member is formed by a telescopic blade (43) pivotally mounted around an articulation axis (44) between the upper and lower edges of the front wall (41) of said hopper (40).

9. The vessel according to Claim 1, **characterised in that** the side walls of the open front part of said collecting vessel comprise suction ports (50) for the oil products and are connected to said storage tank (46).

10. The vessel according to any one of the preceding claims, **characterised in that** it comprises at least one stabilising panel (47) which can be moved between a position held against the bottom of the hull (21) and a position separated from said bottom.

11. A mobile storage and transport installation for oil products, **characterised in that** it includes a logistical vessel (10), the hull (14) of which is equipped with at least one storage tank (16), a berthing area (13) for at least one collecting vessel (20) according to any one of the preceding claims and means for transferring these oil products from said collecting vessel (20) to said tank (16).

12. The mobile installation according to Claim 11, **characterised in that** the berthing area (13) is provided inside the logistical vessel (10) and communicates with the sea via the rear of said logistical vessel.

## Patentansprüche

1. Schiff zur Rückgewinnung von an der Meeresoberfläche schwimmenden Erdölprodukten, enthaltend:
- einen offenen Vorderteil, der mit einer drehbaren Rückgewinnungstrommel (24) ausgerüstet ist, die teilweise eingetaucht ist und in Bezug auf die Außenoberfläche dieser Trommel (24) zwischen zwei jeweils herausgefahrenen und eingefahrenen Stellungen verschiebbare Längselemente (32) enthält,
- ein Sieb (40), das hinter der besagten Trommel (24) zur Rückgewinnung und zum Sammeln der von dieser Trommel (24) entfernten Erdölprodukten angeordnet ist, und
- Mittel (45) zum Transfer dieser Erdölprodukte vom Sieb (40) hin zu mindestens einem Klärungs- und Lagerungsbehälter (46),
- **dadurch gekennzeichnet, dass** die Sammeltrommel (24) einen zylindrischen Mantel (25) enthält, der drehangetrieben ist und in regelmäßigen Intervallen Längsschlitze (28) enthält, wobei jeder der Schlitze eines der besagten Elemente (32) enthält, das von einer in dem entsprechenden Schlitz (28) gleitenden Schaufel (32) gebildet ist, wobei die besagte Schaufel mit Mitteln (33, 35, 36) zur Bewegung zwischen der herausgefahrenen Stellung zum Einsammeln der Erdölprodukte und der auf Höhe des Siebs (40) zum Ausschütten dieser Produkte in das besagte Sieb (40) eingefahrenen Stellung verbunden ist, wobei die Mittel zum Bewegen der gleitenden Schaufeln (32) einerseits durch mindestens eine feste Nocke (33), die einen konzentrischen zylindrischen, der herausgefahrenen Stellung der Schaufeln (32) entsprechenden Teil mit einem Mantel (25) und eine, zum Zentrum des Mantels (25) hin gekrümmte und der eingefahrenen Stellung der Schaufeln (32) entsprechende Stellung enthält, und andererseits durch eine, auf der Kante der besagten Nocke (33) montierte und zum Zusammenwirken mit jeweils mit einem Belag (32a) einer Schaufel (32) verbundenen Wagen (36) bestimmte Führungsschiene (35) gebildet sind.

2. Schiff nach Patentanspruch 1, **dadurch gekennzeichnet, dass** der Mantel (25) der Trommel (24) durch kreisförmige Abschnitte (26) gebildet ist, die voneinander durch Streben (27) getrennt sind, wobei zwischen den Rändern der beiden aneinander angrenzenden Abschnitte (26) der besagte Längsschlitz (28) und die von der Sohle (32a) der entsprechenden Schaufel (32) durchquerten Radialdurchlässe (29) eingefügt sind.

3. Schiff nach Patentanspruch 1 oder 2, **dadurch gekennzeichnet, dass** die Trommel (24) vertikal bewegbar ist.

4. Schiff nach Patentanspruch 1 oder 2, **dadurch gekennzeichnet, dass** die Sammeltrommel (24) Mitteln (41, 41a) zum Abkratzen der äußeren Oberfläche des Mantels (25) zugeordnet ist.

5. Schiff nach Patentanspruch 4, **dadurch gekennzeichnet, dass** die Mittel zum Abkratzen durch den, auf der äußeren Oberfläche des Mantels (25) durch mindestens eine elastische Rückholeinheit angedrückt gehaltenen oberen Rand (41 a) der Frontalwand (41) des Siebs (40) gebildet sind.

6. Schiff nach Patentanspruch 5, **dadurch gekennzeichnet, dass** der untere Rand der Frontalwand (41) des Siebs (40) um eine Horizontalachse (42) herum angelenkt montiert ist.

7. Schiff nach Patentanspruch 1, **dadurch gekennzeichnet, dass** das Sieb (40) mit einer Kratzeinheit (43) auf der Innenoberfläche der Frontalwand (41) ausgerüstet ist, um die Erdölprodukte zum Boden des besagten Siebs (40) zu schieben.

8. Schiff nach Patentanspruch 7, **dadurch gekennzeichnet, dass** die Kratzeinheit durch eine teleskopische Klinge (43) gebildet ist, die zwischen den oberen und unteren Rändern der Frontalwand (41) des Siebs (40) drehbar um eine Artikulationsachse montiert ist.

9. Schiff nach Patentanspruch 1, **dadurch gekennzeichnet, dass** die Seitenwände des vorderen offenen Teils des besagten Rückgewinnungsschiffs mit dem besagten Lagerungsbehälter verbundene Saugöffnungen (50) für die Erdölprodukte enthält.

10. Schiff nach irgendeinem der vorangehenden Patentansprüche, **dadurch gekennzeichnet, dass** es mindestens eine Stabilisierungsplatte (47) enthält, die zwischen einer gegen den Boden des Rumpfes (21) angelegten Stellung und einer vom besagten Boden entfernten Stellung bewegbar ist.

11. Mobile Anlage zum Lagern und Befördern von Erdölprodukten, **dadurch gekennzeichnet, dass** sie ein logistisches Schiff (10), von dem der Rumpf (14) mit mindestens einem Lagerungsbehälter (16), einem Bereich (13) zum Andocken mindestens eines Rückgewinnungsschiffes (20) nach irgendeinem der vorangehenden Patentansprüche und Mitteln zum Transfer dieser Erdölprodukte des besagten Rückgewinnungsschiffs (20) zum besagten Behälter (16) enthält.

12. Mobile Anlage nach Patentanspruch 11, **dadurch gekennzeichnet, dass** der Andockbereich (13) im Innern des logistischen Schiffs (10) eingerichtet ist und mit dem Meer vom Hinterteil des logistischen Schiffs her in Verbindung steht.
